(19) Europäisches Patentamt
European Patent Office
Office européen des brevets

(11) **EP 3 893 172 A1**

(12) **EUROPÄISCHE PATENTANMELDUNG**

(43) Veröffentlichungstag:
**13.10.2021 Patentblatt 2021/41**

(51) Int Cl.:
***G06Q 10/06*** *(2012.01)*

(21) Anmeldenummer: **20169185.4**

(22) Anmeldetag: **10.04.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens AG Österreich**
**1210 Wien (AT)**

(72) Erfinder:
• **Haselböck, Alois**
**3392 Schönbühel-Aggsbach (AT)**
• **Wallner, Stefan**
**1020 Wien (AT)**

(74) Vertreter: **Maier, Daniel Oliver**
**Siemens AG**
**Postfach 22 16 34**
**80506 München (DE)**

(54) **VERFAHREN UND SYSTEM ZUR HERSTELLUNG EINES PRODUKTS MITTELS EINER OPTIMALEN PROZESSKETTE**

(57) Verfahren zur Herstellung eines Produkts mittels einer optimalen Prozesskette, wobei die Herstellung durch Arbeitsschritte der Prozesskette unter Verwendung von Produktionsmitteln erfolgt, und die Produktionsmittel an zumindest zwei Produktionsstätten gelegen sind, wobei folgende Schritte ausgeführt werden:
a) Bilden einer Material-Datenstruktur und einer Produkt-Datenstruktur,
b) Bestimmen von Produktionskosten und Transportkosten,
c) Zuordnung der Material- und der Produkt-Datenstruktur zu Produktionsmitteln,
d) Ermitteln einer optimalen Prozesskette mit minimalen Produktions- und Transportkosten,
e) Erzeugen von Ausführungsgraphen ($G_{FA}$, $G_{FC}$), wobei:

e1) Ermitteln von Teilprodukten und Teilprozessen für jede Produktionsstätte, welche jeweils anderen Produktionsstätten zugeordnet sind,
e2) Ersetzen der im vorhergehenden Schritt ermittelten Teilprodukte und Teilprozesse durch eine Markierung und Entfernen aller Knoten zwischen Teilprodukten und Teilprozessen,
e3) Bestimmen von Ausführungsgraphen ($G_{FA}$, $G_{FC}$) und daraus Ermitteln einer Transportkette,

f) Herstellen des Produkts unter Verwendung der Ausführungsgraphen ($G_{FA}$, $G_{FC}$), der optimalen Prozesskette und der Transportkette durch Herstellung der Teilprodukte an den jeweiligen Produktionsstätten und Transport der Teilprodukte zwischen den jeweiligen Produktionsstätten.

FIG 6

**Beschreibung**

Die Erfindung betrifft ein Verfahren und ein System zur Herstellung eines Produkts mittels einer optimalen Prozesskette, wobei die Herstellung durch Arbeitsschritte der Prozesskette unter Verwendung von Produktionsmitteln erfolgt, und die Produktionsmittel an zumindest zwei Produktionsstätten gelegen sind.

In der zukünftigen Automatisierung ist die sogenannte Herstellbarkeitsprüfung (engl. "Producibility Check") ein Test, ob ein, in Form einer Stückliste/ Prozessliste definiertes Produkt in einer bestimmten Fabrik hergestellt werden kann oder nicht.

Wenn das Produkt hergestellt werden kann, gibt die Herstellbarkeitsprüfung ein oder mehrere sogenannte Ausführungsgraphen zurück, also Arbeitsabläufe, wie jeder Prozess (also Produktionsschritt) auf einer geeigneten Maschine ausgeführt werden kann.

Wenn es mehr als ein solches Ausführungsdiagramm gibt, kann die Optimierung hinsichtlich gewünschter Leistungskennzahlen, wie Produktionsgeschwindigkeit oder minimale $CO_2$-Emmissionen, den besten Produktionsablauf finden.

Eine solche Funktion zur Überprüfung der Herstellbarkeit ist normalerweise Teil eines Produkt-/ Produktionsmarktes, auf dem Verbraucher ihr Produkt konfigurieren und die Fabriken identifizieren können, in denen ihr neues Produkt hergestellt werden kann.

Aber was wäre, wenn keine einzige Fabrik allein das neue Produkt produzieren könnte, sondern zwei oder mehr Fabriken zusammen? Die Standard-Herstellbarkeitsprüfung prüft immer ein Produkt gegen eine Fabrik und kann keine Produktionsvariante für mehrere Fabriken finden.

Derzeit gibt es verschiedene Gründe, warum eine Herstellbarkeitsprüfung fehlschlägt:

(i) In einem Diagnose-/ Empfehlungsschritt werden Änderungen in der Produktkonfiguration empfohlen, sodass eine Fabrik gefunden werden kann, die das modifizierte Produkt herstellen kann.

(ii) Ein Diagnose-/ Empfehlungsschritt empfiehlt Neukonfigurationen in einer Fabrik, sodass das Produkt hergestellt werden kann (beispielsweise durch Hinzufügen einer bestimmten Maschine).

(iii) Ein Produktionsingenieur analysiert die Stückliste/ Prozessliste und teilt die Stückliste/ Prozessliste manuell in Teile auf, die einzeln in verschiedenen Fabriken hergestellt werden können. Natürlich müssen die verschiedenen Teile schlussendlich zusammengefügt werden.

Nachteile der Lösungen (i) und (ii) sind erforderliche Änderungen am Produkt oder in einer Fabrik.

Nachteile der Lösung (iii) sind der hohe manuelle Aufwand eines Experten und die Fehleranfälligkeit aufgrund mangelnder Automatisierung.

Ferner ist es nachteilig, dass eine gewünschte beziehungsweise erreichte Produkt-Variabilität hinsichtlich realisierter technischer Merkmale im gewünschten Produkt zu hohen Kosten, langer Produktionszeit, hohem logistischem Aufwand und auch hohem Herstellungsrisiko führen kann.

Es ist Aufgabe der Erfindung eine Herstellbarkeitsprüfung zur Multi-Fabrik-Anwendung bereitzustellen, in welcher ein optimaler Produktionsplan berechnet wird, falls keine einzelne Fabrik für die gesamte Produktion gefunden werden konnte.

Es soll die Variabilität des Produktionsprozesses und des Produktionssystems anhand von technischen Produktmerkmalen verbessert werden und gleichzeitig eine optimale Produktion erreicht werden, um die Kosten, das Risiko oder die Produktion hinsichtlich der gewünschten Leistungskennzahlen zu optimieren und die Verfügbarkeit zu verbessern.

Die Erfindung bezieht sich daher auf ein technisches Produktionsverfahren und ein technisches Produktionssystem, welches geografisch verteilte Produktionsstätten umfasst, welche über ein Transportsystem miteinander verbunden sind.

Mit anderen Worten soll ein Produktionsplan für ein Produkt unter Berücksichtigung mehrerer Fabriken mit minimalen Produktionskosten gefunden werden, und ein Produkt dementsprechend produziert werden.

Unter den Produktionskosten lassen sich neben tatsächlichen Kosten auch die gewünschten Leistungskennzahlen, wie eine Produktionszeit, das heißt die Dauer und der Zeitpunkt der Produktion, $CO_2$-Emmissionen oder Energieverbrauch, subsumieren.

Die erfindungsgemäße Aufgabe wird durch ein Verfahren eingangs genannter Art gelöst, indem folgende Schritte ausgeführt werden:

a) Bilden einer Material-Datenstruktur und einer Produkt-Datenstruktur für das Produkt unter Verwendung von technischen Parametern des Produkts,

b) Bestimmen für alle Elemente der Material- und der Produkt-Datenstruktur von jeweiligen Produktionskosten und Transportkosten,

c) Zuordnung der Material- und der Produkt-Datenstruktur zu Produktionsmitteln,

d) Ermitteln einer optimalen Prozesskette mit minimalen Produktions- und Transportkosten,

e) Erzeugen von Ausführungsgraphen, umfassend Teilprozessketten und zumindest eine Transportkette von Teilprodukten für jede der zumindest zwei Produktionsstätten, wobei:

> e1) Ermitteln von Teilprodukten und Teilprozessen für jede Produktionsstätte, welche jeweils anderen Produktionsstätten zugeordnet sind,
>
> e2) Ersetzen der im vorhergehenden Schritt ermittelten Teilprodukte und Teilprozesse durch eine Markierung und Entfernen aller Knoten zwischen Teilprodukten und Teilprozessen,
>
> e3) Bestimmen von Ausführungsgraphen für die im vorhergehenden Schritt ermittelten Teilprozesse mit Markierungen und daraus Ermitteln einer Transportkette,

f) Herstellen des Produkts unter Verwendung der Ausführungsgraphen, der optimalen Prozesskette und der Transportkette durch Herstellung der Teilprodukte an den jeweiligen Produktionsstätten und Transport der Teilprodukte zwischen den jeweiligen Produktionsstätten.

Dadurch wird die Produktion von Produkten mit einer höheren Anzahl von variablen Produktmerkmalen ermöglicht.

Die optimale Produktion minimiert ferner die Kosten und das Risiko der Produktion und steigert die Verfügbarkeit des Produkts.

In einer Weiterbildung der Erfindung ist es vorgesehen, dass die zumindest zwei Produktionsstätten an verschiedenen geographischen Orten gelegen sind.

In einer Weiterbildung der Erfindung ist es vorgesehen, dass im Schritt d) die optimale Prozesskette nach dem "operations research"-Verfahren wie "integer linear programming" oder "constraint reasoning" oder "answer set programming" ermittelt wird.

Dadurch kann das vorliegende Optimierungsproblem besonders effizient gelöst werden.

In einer Weiterbildung der Erfindung ist es vorgesehen, dass zumindest eine dynamische Zustandsinformation eines Produktionsmittels, wie beispielswese eine aktuelle durchschnittliche Produktionszeit oder eine aktuelle durchschnittliche Leistungsaufnahme, berücksichtigt wird.

Dies erfolgt vorzugsweise im Verfahrensschritt d).

Mit anderen Worten kann ein Produktionsprozess bei Auslastungsspitzen einer Maschine dynamisch von einer anderen Maschine mit geringerer Auslastung übernommen werden.

In einer Weiterbildung der Erfindung ist es vorgesehen, dass die Produktionskosten einen Startzeitpunkt eines jeweiligen Produktionsschritts in einer Prozesskette umfassen.

Dadurch lässt sich beispielsweise berücksichtigen, dass eine Produktion nicht unmittelbar nach Wareneingang mit der Produktion beginnen kann. Mit anderen Worten kann eine vorübergehend nur beschränkt verfügbare Produktionsstätte oder eines Produktionsmittels mittels hoher Produktionskosten ausgedrückt werden.

Die erfindungsgemäße Aufgabe wird durch ein System eingangs genannter Art gelöst, wobei das System Produktionsmittel an zumindest zwei Produktionsstätten und Transportmittel zwischen den jeweiligen Produktionsstätten umfasst, wobei die Herstellung des Produkts durch Arbeitsschritte der Prozesskette unter Verwendung der Produktionsmittel erfolgt, wobei das System dazu eingerichtet ist, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:

Fig. 1    schematisch in allgemeiner Form einen BOM/BOP-Baum,
Fig. 2    ein Beispiel für einen BOM/BOP-Baum,
Fig. 3    ein Beispiel für eine Transportkosten-Tabelle,
Fig. 4    ein Beispiel für eine Ergebnis-Tabelle der Produktionskosten für alle Produkte,
Fig. 5    den optimalen Produktionsplan für das Beispiel der Fig. 2-4,
Fig. 6    die Ausführungsgraphen für das Beispiel der Fig. 2-5.

Es ist klar, dass weitere, nicht gezeigte Produktionsschritte zur Herstellung eines Produkts notwendig sind, wie eine entsprechende Konfiguration von Anlagen. Zum besseren Verständnis werden diese Schritte nicht dargestellt und beschrieben.

Die Erfindung ist nicht auf die hier im Detail beschriebenen spezifischen Ausführungsformen beschränkt, sondern umfasst alle Varianten, Kombinationen und Modifikationen davon, die in den Rahmen der beigefügten Ansprüche fallen.

Ein Produktionsplan ist eine Zuordnung der Teile des Produkts zu den Fabriken, die sie produzieren können.

Optimalität wird definiert als minimale Produktionskosten zusammen mit minimalen Transport- bzw. Versandkosten.

Transportkosten sind im vorliegenden Zusammenhang mit Versandkosten gleichbedeutend.

Ein Produkt ist ein zu erzeugender Gegenstand. Ein Produkt besteht normalerweise aus Unterprodukten, die wiederum aus Unterprodukten usw. bestehen können. Diese Partonomie repräsentiert die Stückliste BOM (engl. "Bill of Material").

Ein Prozess ist ein Produktionsvorgang. Einem Produkt ist eine Reihe von Prozessen zugeordnet, die zur Herstellung des Produkts erforderlich sind. Die Menge aller Prozesse eines Produkts ist die Prozessliste BOP (engl. "Bill of Process").

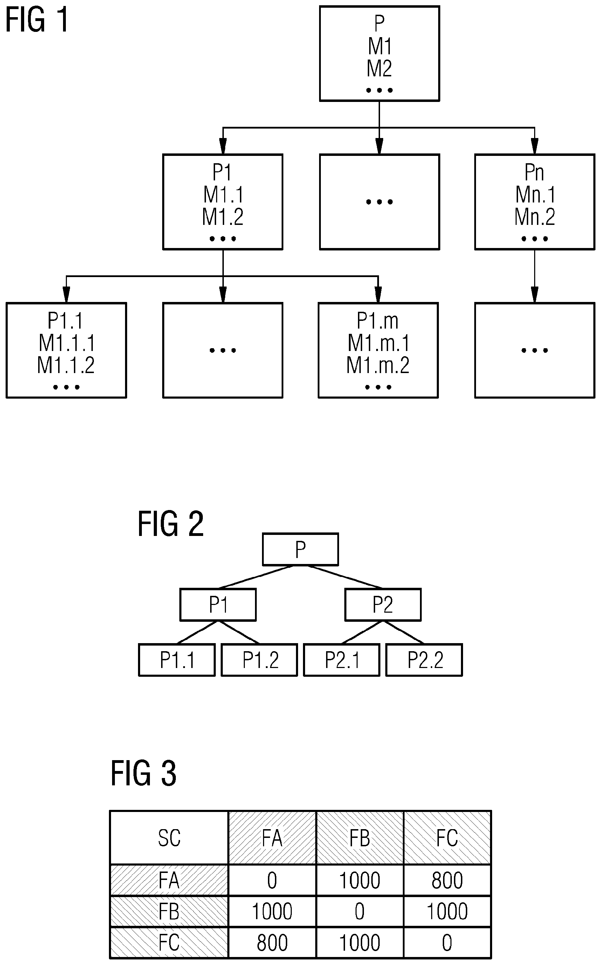

Produkte und Prozesse bilden zusammen einen BOM/BOP-Baum gemäß **Fig. 1.**

Produkte und Prozesse sind normalerweise komplexe Objekte mit Eigenschaften und Einschränkungen. Beispiele für Produkteigenschaften sind Material- und Materialparameter, geometrische Parameter, Gewicht usw. Beispiele für Prozesseigenschaften sind die erforderliche Fähigkeit und die entsprechenden Fähigkeitsparameter. Beispielsweise sind Parameter einer Bohrfertigkeit die Position und Ausrichtung des Lochs, die Breite und Tiefe, die Genauigkeitstoleranz usw.

Einschränkungen begründen zusätzliche Einschränkungen für die Maschine, die den Prozess ausführt, z. B. muss die von einem Bohrroboter bereitgestellte Toleranz gleich oder besser als die erforderliche Toleranz sein.

Eine Fabrik stellt Maschinen zur Verfügung, die über Fähigkeiten (engl. "skills") zur Durchführung von Prozessen verfügen.

Die Entscheidung, ob eine Maschine einen Prozess ausführen kann, der alle Skill-Einschränkungen und Maschinen-Einschränkungen erfüllt, wird als Skill-Matching bezeichnet.

Skill Matching ist eine der Hauptaufgaben der sogenannten Herstellbarkeitsprüfung. Die Herstellbarkeitsprüfung kann prüfen, ob ein Prozess oder ein Stücklisten- / Stücklistenbaum in einer bestimmten Fabrik durchgeführt werden kann oder nicht. Wenn produzierbar, kann die Herstellbarkeitsprüfung einen oder mehrere Produktionsworkflows mit ihren jeweiligen Kosten zurückgeben. (Die Kosten können in Bezug auf Zeit, Geld, CO2-Fußabdruck, Energieverbrauch usw. gemessen werden.) Der Fall, dass ein Produkt, das durch einen Stücklisten- / Stücklistenbaum dargestellt wird, nicht in einer einzigen Fabrik hergestellt werden kann, könnte durch die Verteilung der Produktion auf mehrere Fabriken gelöst werden Wenn ein Unterprodukt in einer anderen Fabrik als das Hauptprodukt hergestellt wird, muss das Unterprodukt von seiner produzierenden Fabrik zur Hauptfabrik geliefert werden. Dieser Transport- bzw. Versand ist nicht kostenlos, er verursacht Kosten (Zeit, Geld, Energie, ...). Diese Kosten werden durch eine Eingabefunktion dargestellt

$$shipping\_costs \colon F \times F \to \mathbb{R}$$

Wobei $F$ eine Menge von Fabriken ist.

$f_1$ und $f_2$ sind Fabriken aus der Menge $F$.

$shipping\_costs(f_1, f_2)$ sind die Kosten für den Transport eines Produkts von der Fabrik $f_1$ zur Fabrik $f_2$. Trivialerweise ist $shipping\_costs(f,f)$ = 0. Die Transportkosten sind ein relevanter Kostenfaktor in einer, über mehrere Fabriken verteilten Produktion des Produkts.

Unter den Transportkosten lässt sich neben tatsächlichen Kosten auch die Transportzeit, das heißt die Dauer und der Zeitpunkt für einen Transport beziehungsweise das Bewegen oder Umschlagen von Produkten, zwischen Fabriken subsumieren.

Unter der Annahme, dass für die Herstellbarkeitsprüfung eine Funktion

$$compute\_production\_costs \colon P \times F \to \mathbb{R}$$

bereitgestellt wird, wobei $P$ eine Menge aller Produkte $p$ des BOM/BOP-Baums ist, und $F$ eine Menge aller Fabriken ist, liefert die Funktion als Ergebnis einen Parameter, welcher die Kosten bei der Ausführung der gesamten Produktion und der Transportschritte für ein gewünschtes Produkt in einer beteiligten Fabrik beschreibt. Falls dieses Produkt in einer bestimmten Fabrik nicht herstellbar ist, so beträgt dieser Parameter unendlich als speziellen Wert mit dem Zeichen "∞".

Der optimale Multi-Fabrik-Produktionsplan kann nun ermittelt werden und das gewünschte Produkt kann dementsprechend hergestellt werden:

a) Für die Menge **P** aller Produkte **p** wird ein BOM/BOP-Baum erzeugt, wie vorstehend erläutert.

b) Für alle Produkte p des BOM/BOP-Baums und alle Fabriken **f** eines jeweiligen Marktplatzes werden die jeweiligen Produktionskosten berechnet und in einer Tabelle **production_costs** gespeichert:

**f or all p $\in$ P:**

**f or all f $\in$ F:**

$$production\_costs[p, f] := compute\_production\_costs(p, f)$$

Obwohl jede dieser Berechnungen ein kombinatorisches Problem mit exponentiellem "worst-case" Verhalten ist, können diese Berechnungen stark parallelisiert werden. Alle Aufrufe von **"compute_production_costs"** können gleichzeitig durchgeführt werden.

**Fig. 2** bis **Fig. 4** zeigen ein einfaches Beispiel für eine Berechnung der Produktionskosten.

In **Fig. 2** ist ein BOM/BOP-Baum dargestellt.

Eine Produktmenge **P** umfasst Produkte **P1**, **P2** mit jeweiligen Teil-Produkten **P1.1**, **P1.2** und **P2.1**, **P2.2**.

In **Fig. 3** sind die Transportkosten (engl. "shipping costs", kurz "SC") für dieses Beispiel zwischen den Fabriken **FA, FB, FC** dargestellt.

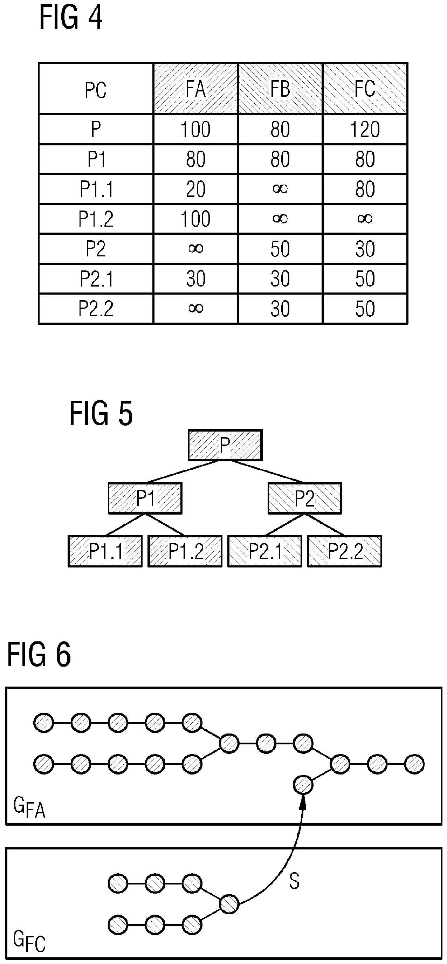

**Fig. 4** zeigt die Ergebnisse der Produktionskosten (engl. "production costs", kurz "PC") für alle Produkte **P1**, **P2** und Teil-Produkte **P1.1**, **P1.2**, **P2.1**, **P2.2** des BOM/BOP-Baums.

c) Es wird eine Zuordnung von Produkten zu Fabriken gesucht, welche die Gesamt-Produktionskosten minimiert. Die Gesamt-Produktionskosten umfassen Produktionskosten und Transportkosten. Die Zuordnung eines Produkts zu einer Fabrik kann durch eine Funktion **factory** dargestellt werden:

$$factory: P \to F$$

$$costs_{total} = costs_{production} + costs_{shipping}$$

$$costs_{production} = \sum_{p \in P} production\_costs[p, factory(p)]$$

$$costs_{shipping} =$$

$$\sum_{p \in P} \sum_{p_{child} \in sub-products(p)} shipping\_costs(factory(p_{child}), factory(p))$$

d) Das vorliegende Optimierungsproblem kann besonders günstig mittels "operations research"-Verfahren wie "integer linear programming" oder "constraint reasoning" oder auch "answer set programming" gelöst werden.

Da üblicherweise die Transport- bzw. Versandkosten dominant sind, ist die Optimierung dazu ausgelegt, so wenig Fabriken als möglich zu verwenden.

In **Fig. 5** ist der optimale Produktionsplan für dieses Beispiel gezeigt. Durch die Schraffur der Baumelemente ist erkennbar, dass die Fabriken **FA** (z.B. **P1**) und **FC** (z.B. **P2**) involviert sind.

Der optimale Produktionsplan weist Gesamt-Produktionskosten von 430 Einheiten, Gesamt-Transportkosten von 800 Einheiten und Gesamt-Kosten von 1230 Einheiten auf.

Die Einheiten können beispielsweise Zeiteinheiten sein, wie beispielsweise eine Minute.

e) Für die Menge an Fabriken, welche zur Produktion ausgewählt sind, werden ein oder mehrere Ausführungsgraphen erzeugt.

Ein Ausführungsgraph (engl. "execution graph") ist eine Zuordnung jedes Prozesses einer BOP zu einer Maschine, die diesen Prozess ausführen kann. Zusätzlich sind Abfolge- und Produkt-Routing Informationen darin enthalten.

Es kann eine Funktion definiert werden, welche einen Ausführungsgraphen für einen vorgegebenen BOM/BOP-Baum **p** und eine vorgegebene Fabrik **f** erzeugt:

**gen_exec_graphs(p,f)**

Die Erzeugung des Ausführungsgraphen weist dabei folgende Schritte auf:

e1) Führe im BOP/BOM-Baum mit dem Produkt *p* an dessen Wurzel eine "top-down"-Suche für alle Produkte *p\** durch, die verschiedenen Fabriken, also ungleich *p,* zugeordnet sind, also

$$factory(p) \neq factory(p^*)$$

Jedoch soll keine Menge *P\**, welche Teil-Produkte von *p\** aufweist, berücksichtigt werden.

e2) Ersetze alle Prozesse von allen Produkten *p\** der Menge *P\** durch einen einzelnen Prozess *supply.* Damit ist gemeint, dass dieses Produkt irgendwo anders hergestellt wird und als "3rd party"-Produkt im Kontext der Produktion *p* gilt.

Zusätzlich entferne alle Teil-Knoten von allen Produkten *p\**.

e3) Berechne die Ausführungsgraphen *$G_{FA}$, $G_{FC}$* für diesen reduzierte BOM/BOP-Baum durch Aufruf der Funktion:

*gen_exec_graphs($p_{single\_factory}$, factory($p_{single\_factory}$))*

Dieser Aufruf ist eine übliche Herstellbarkeitsprüfung, bei welchem nur eine einzige Fabrik berücksichtigt wird.

Wiederhole die Schritte a) bis c) für alle Teil-Bäume *p\** der Menge *P\**.

**Fig. 6** zeigt die Ausführungsgraphen *$G_{FA}$* und *$G_{FC}$* für zwei Teile jener Produkte, deren Herstellung über zwei Fabriken verteilt sind und ein Transport S von der Fabrik *FC* zur Fabrik *FA* vorgesehen ist.

f) Herstellen des Produkts unter Verwendung der Ausführungsgraphen (*$G_{FA}$, $G_{FC}$),* der optimalen Prozesskette und der Transportkette durch Herstellung der Teilprodukte an den jeweiligen Produktionsstätten und Transport der Teilprodukte zwischen den jeweiligen Produktionsstätten.

Wird die Fertigung eines Produkts an mehrere Fabriken delegiert, so gilt die Forderung, möglichst wenige Daten und Know-how den jeweils beteiligten Fabriken Dritten gegenüber, beispielsweise Lieferdienste oder Betreiber einer Teil-Fertigung, zu offenbaren, da diese Dritten in Konkurrenz mit dem Produktanbieter und den anderen Fabriken stehen können.

Das hier beschriebene Verfahren erlaubt es, an jede an der Produktion des Produkts beteiligte Fabrik nur die absolut notwendige, minimale Menge an Daten und Informationen zu übermitteln, nämlich nur den Ausführungsgraphen mit den Prozessschritten und Maschinenzuweisungen für das jeweilige Teilprodukt (siehe Schritt e3)), für das die Fabrik verantwortlich ist. Der Ausführungsgraph und die Details des Gesamtprodukts müssen nicht offenbart werden.

**Bezugszeichenliste:**

| | |
|---|---|
| SC | Transportkosten, Versandkosten, "shipping costs" |
| PC | Produktionskosten, "production costs" |
| P | Produktmenge |
| P1, P2 | Produkt |
| *$G_{FA}$, $G_{FC}$* | Ausführungsgraph, Prozesskette |
| P1.1, P1.2, P2.1, P2.2 | Teilprodukt |
| FA, FB, FC | Fabrik |
| M1.1, M1.2, Mn.1, Mn.2, M1.1.1, M1.1.2, M1.m.1, M1.m.2 | Maschine, Produktionsmittel |

**Patentansprüche**

1. Verfahren zur Herstellung eines Produkts mittels einer optimalen Prozesskette, wobei die Herstellung durch Arbeitsschritte der Prozesskette unter Verwendung von Produktionsmitteln (Mn.m) erfolgt, und die Produktionsmittel (Mn.m) an zumindest zwei Produktionsstätten gelegen sind, **dadurch gekennzeichnet, dass** folgende Schritte ausgeführt werden:

a) Bilden einer Material-Datenstruktur (BOM) und einer Produkt-Datenstruktur (BOP) für das Produkt unter Verwendung von technischen Parametern des Produkts (P),

b) Bestimmen für alle Elemente der Material- und der Produkt-Datenstruktur (BOM, BOP) von jeweiligen Produktionskosten (PC) und Transportkosten (SC),

c) Zuordnung der Material- und der Produkt-Datenstruktur (BOM, BOP) zu Produktionsmitteln (Mn.m),

d) Ermitteln einer optimalen Prozesskette mit minimalen Produktions- und Transportkosten (PC, SC),

e) Erzeugen von Ausführungsgraphen ($G_{FA}$, $G_{FC}$), umfassend Teilprozessketten und zumindest eine Transportkette von Teilprodukten für jede der zumindest zwei Produktionsstätten, wobei:

> e1) Ermitteln von Teilprodukten und Teilprozessen für jede Produktionsstätte, welche jeweils anderen Produktionsstätten zugeordnet sind,
>
> e2) Ersetzen der im vorhergehenden Schritt ermittelten Teilprodukte und Teilprozesse durch eine Markierung und Entfernen aller Knoten zwischen Teilprodukten und Teilprozessen,
>
> e3) Bestimmen von Ausführungsgraphen ($G_{FA}$, $G_{FC}$) für die im vorhergehenden Schritt ermittelten Teilprozesse mit Markierungen und daraus Ermitteln einer Transportkette,

f) Herstellen des Produkts unter Verwendung der Ausführungsgraphen ($G_{FA}$, $G_{FC}$), der optimalen Prozesskette und der Transportkette durch Herstellung der Teilprodukte an den jeweiligen Produktionsstätten und Transport der Teilprodukte zwischen den jeweiligen Produktionsstätten.

2. Verfahren nach dem vorhergehenden Anspruch, wobei die zumindest zwei Produktionsstätten an verschiedenen geographischen Orten gelegen sind.

3. Verfahren nach einem der vorhergehenden Ansprüche, wobei zumindest eine dynamische Zustandsinformation eines Produktionsmittels berücksichtigt wird, vorzugsweise im Verfahrensschritt d) .

4. Verfahren nach einem der vorhergehenden Ansprüche, wobei im Schritt d) die optimale Prozesskette nach dem "operations research"-Verfahren wie "integer linear programming" oder "constraint reasoning" oder "answer set programming" ermittelt wird.

5. Verfahren nach einem der vorhergehenden Ansprüche, wobei die Produktionskosten (PC) einen Startzeitpunkt der jeweiligen Produktion umfassen.

6. System zur Herstellung eines Produkts mittels einer optimalen Prozesskette, umfassend Produktionsmittel (Mn.m) an zumindest zwei Produktionsstätten und Transportmittel zwischen den jeweiligen Produktionsstätten, wobei die Herstellung des Produkts durch Arbeitsschritte der Prozesskette unter Verwendung der Produktionsmittel (Mn.m) erfolgt, **dadurch gekennzeichnet, dass** das System dazu eingerichtet ist, das Verfahren nach einem der vorhergehenden Ansprüche auszuführen.

FIG 1

```
                              ┌──────────┐
                              │    P     │
                              │   M1     │
                              │   M2     │
                              │  • • •   │
                              └──────────┘
         ┌──────────────────────┼──────────────────────┐
         ▼                      ▼                       ▼
   ┌──────────┐          ┌──────────┐            ┌──────────┐
   │   P1     │          │          │            │   Pn     │
   │  M1.1    │          │  • • •   │            │  Mn.1    │
   │  M1.2    │          │          │            │  Mn.2    │
   │  • • •   │          └──────────┘            │  • • •   │
   └──────────┘                                  └──────────┘
   ┌──────┼──────────────────────┐                    │
   ▼      ▼                      ▼                     ▼
┌────────┐ ┌──────────┐   ┌──────────┐          ┌──────────┐
│  P1.1  │ │          │   │   P1.m   │          │          │
│ M1.1.1 │ │  • • •   │   │  M1.m.1  │          │  • • •   │
│ M1.1.2 │ │          │   │  M1.m.2  │          │          │
│ • • •  │ └──────────┘   │  • • •   │          └──────────┘
└────────┘                └──────────┘
```

FIG 2

```
              ┌─────┐
              │  P  │
              └─────┘
          ┌─────┘ └─────┐
      ┌──────┐       ┌──────┐
      │  P1  │       │  P2  │
      └──────┘       └──────┘
     ┌──┘ └──┐      ┌──┘ └──┐
 ┌──────┐ ┌──────┐ ┌──────┐ ┌──────┐
 │ P1.1 │ │ P1.2 │ │ P2.1 │ │ P2.2 │
 └──────┘ └──────┘ └──────┘ └──────┘
```

FIG 3

| SC | FA | FB | FC |
|----|----|----|----|
| FA | 0 | 1000 | 800 |
| FB | 1000 | 0 | 1000 |
| FC | 800 | 1000 | 0 |

## FIG 4

| PC | FA | FB | FC |
|------|------|------|------|
| P | 100 | 80 | 120 |
| P1 | 80 | 80 | 80 |
| P1.1 | 20 | ∞ | 80 |
| P1.2 | 100 | ∞ | ∞ |
| P2 | ∞ | 50 | 30 |
| P2.1 | 30 | 30 | 50 |
| P2.2 | ∞ | 30 | 50 |

## FIG 5

## FIG 6

**Europäisches Patentamt**
**European Patent Office**
**Office européen des brevets**

# EUROPÄISCHER RECHERCHENBERICHT

**Nummer der Anmeldung**

EP 20 16 9185

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 211554 A1 (SIEMENS AG [DE]) 28. Dezember 2017 (2017-12-28) * Anspruch 1; Abbildungen 5,6 * ----- | 1-6 | INV. G06Q10/06 |
| X | EP 3 410 363 A1 (SIEMENS AG [DE]) 5. Dezember 2018 (2018-12-05) * Anspruch 1; Abbildung 3 * ----- | 1-6 | |
| X | DE 10 2017 213583 A1 (SIEMENS AG [DE]) 7. Februar 2019 (2019-02-07) * Anspruch 1; Abbildung 1 * ----- | 1-6 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| München | 30. Juli 2020 | May, Michael |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 9185

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-07-2020

| Im Recherchenbericht angeführtes Patentdokument | Datum der Veröffentlichung | Mitglied(er) der Patentfamilie | Datum der Veröffentlichung |
|---|---|---|---|
| DE 102016211554 A1 | 28-12-2017 | CN 109313435 A<br>DE 102016211554 A1<br>EP 3446185 A1<br>US 2019129393 A1<br>WO 2018001650 A1 | 05-02-2019<br>28-12-2017<br>27-02-2019<br>02-05-2019<br>04-01-2018 |
| EP 3410363 A1 | 05-12-2018 | EP 3410363 A1<br>US 2018349824 A1 | 05-12-2018<br>06-12-2018 |
| DE 102017213583 A1 | 07-02-2019 | CN 111149126 A<br>DE 102017213583 A1<br>EP 3646279 A1<br>US 2020175447 A1<br>WO 2019025594 A1 | 12-05-2020<br>07-02-2019<br>06-05-2020<br>04-06-2020<br>07-02-2019 |

Für nähere Einzelheiten zu diesem Anhang : siehe Amtsblatt des Europäischen Patentamts, Nr.12/82